# EUROPÄISCHE PATENTSCHRIFT

(11) **EP 2 027 402 B1**
(45) Veröffentlichungstag und Bekanntmachung des Hinweises auf die Patenterteilung: **19.12.2012**
(21) Anmeldenummer: 07725922.4
(22) Anmeldetag: 08.06.2007
(51) Int. Cl.: E06B 7/22, F16J 15/06

(54) **VERSTEIFUNGSELEMENT FÜR HOHLKAMMERDICHTUNGSPROFILE**
STIFFENING ELEMENT FOR HOLLOW-CHAMBER SEALING PROFILES
ÉLÉMENT RIGIDIFICATEUR POUR DES PROFILÉS D'ÉTANCHÉITÉ À CAVITÉ

(30) Priorität: 12.06.2006 DE 202006009314 U
(43) Veröffentlichungstag der Anmeldung: 25.02.2009
(73) Patentinhaber: REHAU AG + Co, 95111 Rehau (DE)
(72) Erfinder: LANZL, Thomas, 95615 Marktredwitz (DE); GEIGER, Joachim, 95183 Trogen (DE)
(86) Internationale Anmeldenummer: PCT/EP2007/005087
(87) Internationale Veröffentlichungsnummer: WO 2007/144116

(56) Entgegenhaltungen:
- EP-A- 0 790 469
- EP-A- 1 624 253
- EP-A1- 0 859 196
- EP-A2- 0 180 147

## Beschreibung

Die Erfindung betrifft ein Versteifungselement für Hohlkammerdichtungsprofile mit zwei Schenkeln, die in einem stumpfen Winkel zueinander angeordnet sind, und einem zwischen den beiden Schenkeln angeordnetem Einhängebereich/-abschnitt zum Befestigen des Hohlkammerdichtungsprofils mit dem Versteifungselement an einem Bauteil. Weiterhin betrifft die Erfindung eine Dichtungsanordnung aus einem Hohlkammerdichtungsprofil mit einem derartigen Versteifungselement.

Im Stand der Technik sind derartige Versteifungselemente bekannt, die in Hohlkammerdichtungsprofile eingebracht werden können und somit ein Einknicken des Dichtungsprofils in Krümmungsbereichen verhindern, sowie das Hohlkammerdichtungsprofil in einem definierten Radius krümmen. Damit wird auch in den gekrümmten Bereichen des Hohlkammerdichtungsprofils eine gute Dichtwirkung erzielt.

Nächstliegeuder Stand des Technik ist EP -A-0790469.

Diese Dichtungsanordnungen weisen jedoch den Nachteil auf, dass in das Hohlkammerdichtungsprofil eine relativ große Öffnung, insbesondere ein langer Schlitz, eingebracht werden muss. Dies ist notwendig, weil der Einhängebereich/-abschnitt vorsteht und somit die Öffnung so ausgeführt sein muss, dass der zweite Schenkel in seiner ganzen Länge in die Öffnung einlegbar ist, um das Versteifungselement in das Hohlkammerdichtungsprofil einzuführen. Durch diese große Öffnung im Hohlkammerdichtungsprofil ist für die Positionierung des Verbindungselements mit dem Einhängebereich/-abschnitt das Einbringen eines Klebers notwendig, der das Verbindungselement lagerichtig im Hohlkammerdichtungsprofil fixiert. Durch den Kleber wird aber das Hohlkammerdichtungsprofil in dem Bereich der Verstärkungselemente an einer Dehnung wie im unverklebten Zustand verhindert. Da diese Dichtungsanordnungen mit einer Vorspannung eingebaut werden, um eine gute Dichtwirkung zu erzielen, entsteht eine ungleichmäßige Dehnung des Hohlkammerdichtungsprofils, was zu Spannungsrissen führen kann.

Der vorliegenden Erfindung liegt somit die Aufgabe zugrunde, ein Versteifungselement anzugeben, dass durch eine kleine Öffnung in der Wand des Hohlkammerdichtungsprofils eingebracht werden kann, so dass auf den Kleber zur Lagefixierung verzichtet werden kann und eine gleichmäßige Spannungsverteilung, insbesondere auch im Bereich der Versteifungselemente gewährleistet wird.

Erfindungsgemäß wird diese Aufgabe durch die Merkmale des Anspruchs 1 gelöst.

Durch die räumliche Trennung von Verbindungselement und einem Schenkel ist es möglich, dass nach dem Einführen des Schenkels durch eine Öffnung in einer Außenwandung des Hohlkammerdichtungsprofils, der nicht mit dem Verbindungselement verbunden ist, das Versteifungselement derart weiter einzufädeln, dass das Verbindungselement mit dem Einhängebereich/-abschnitt außerhalb und der zweite Schenkel, der mit dem Verbindungselement an seinem Ende verbunden ist, innerhalb des Hohlkammerdichtungsprofils geführt wird.

Ist die Verbindungsstelle zwischen Schenkelende und Verbindungselement beim Einschieben des Versteifungselements in das Hohlkammerdichtungsprofils erreicht, wird die Verbindungsstelle durch Änderung der Bewegungsrichtung in die Hohlkammer des Hohlkammerdichtungsprofils eingeführt. Danach wird auch das Verbindungselement in das Hohlkammerdichtungsprofil eingefädelt, bis nur noch der Einhängebereich/-abschnitt aus der Öffnung der Außenwandung des Hohlkammerdichtungsprofils herausragt.

Durch die geometrische Gestaltung des Versteifungselements ist es somit vorteilhaft möglich, dass das Versteifungselement durch eine Öffnung, die nur so groß ist, dass der Einhängebereich/-abschnitt durch die Außenwandung herausragen kann, eingeführt werden kann. Somit ist eine Positionierung des Versteifungselements in der Öffnung der Außenwandung des Hohlkammerdichtungsprofils durch den Einhängebereich/-abschnitt in Zusammenwirkung mit der die Öffnung begrenzenden Außenwandung gegeben. Das Einbringen eines Klebers zur Positionierung ist damit nicht notwendig und entfällt somit vorteilhaft.

Durch die unterschiedlichen Abmessungen der Dichtungsanordnungen aus Versteifungselementen und Hohlkammerdichtungsprofilen hat es sich als vorteilhaft erwiesen, die Schenkel unterschiedlich lang auszubilden.

Das Versteifungselement kann kostengünstig als gebogener Draht oder als Stanzteil oder als Formteil, insbesondere als polymeres Formteil, ausgeführt sein.

Um die Steifigkeit des Verbindungselements zu erhöhen, hat es sich weiterhin als vorteilhaft erwiesen, dass der Schenkel, der mit dem Verbindungselement an einem Ende verbunden ist, aus zwei Schenkelabschnitten besteht. Dabei sind die Schenkelabschnitte einerseits mit dem Verbindungselement und andererseits mit dem zweiten Schenkel des Versteifungselements verbunden.

Durch die Verwendung erfindungsgemäßer Versteifungselemente ist es möglich Dichtungsanordnungen nach Anspruch 6 ohne Verklebung der Versteifungselemente herzustellen. Um ein Durchhängen der Dichtung auch bei Wärmeeinwirkung zu vermeiden, werden diese Dichtungsanordnungen mit einer Vorspannung von mehr als 10 % eingebaut. Bei Dichtungsanordnungen mit Kleber besteht hingegen das Problem, dass die Länge des Hohlkammerdichtungsprofil, die beim Einbau eine Dehnung erfährt, nur mit einer geringen Wahrscheinlichkeit bestimmt werden kann, weil der Bereich, in dem der Kleber eingebracht ist, unterschiedlich lang sein kann.

Die Erfindung soll nun an nicht einschränkenden Ausführungsbeispielen näher beschrieben werden. Es zeigt:
Figur 1 - Versteifungselement mit Einhängebereich/-abschnitt außen
Figur 2 - Versteifungselement mit Einhängebereich/-abschnitt innen
Figur 3 - Versteifungselement aus gebogenem Draht
Figur 4 - Versteifungselement mit zwei Schenkelabschnitten
Figur 5 - Seitenansicht der Figur 4
Figur 6 - Seitenansicht der Figur 4 nach plastischer Verformung des Verbindungselements

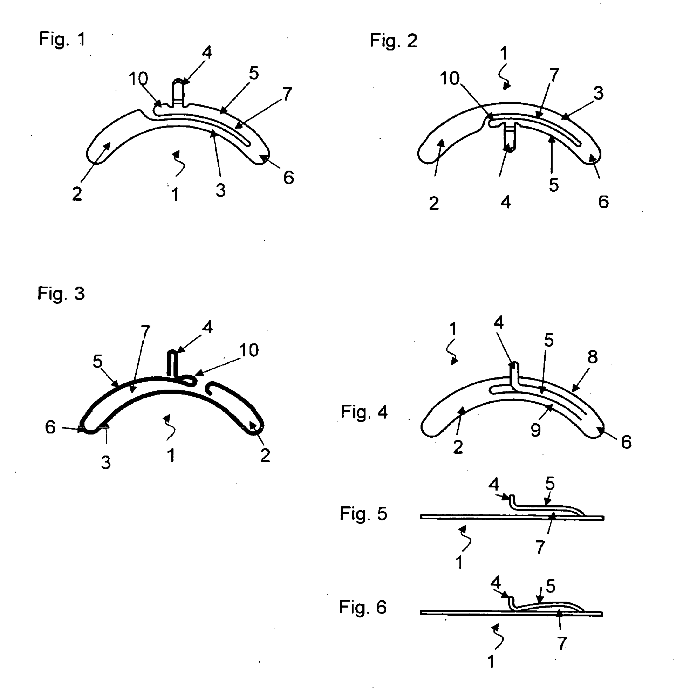

In Figur 1 ist ein Versteifungselement (1) mit einem nach außen weisenden Einhängebereich/-abschnitt (4) dargestellt. Der Einhängebereich/-abschnitt (4) ist über das Verbindungselement (5) mit dem Ende (6) eines Schenkels (3) verbunden. Das Verbindungselement (5) ist von dem Schenkel (3) durch einen Zwischenbereich (7) getrennt. An der dem Verbindungselement (5) gegenüberliegenden Seite des Einhängebereichs/-abschnitts (4) ist ein Fixierelement (10) angeordnet. Dieses Fixierelement (10) wird zuletzt in das Hohlkammerdichtungsprofil eingeführt und verhindert ein unbeabsichtigtes Herausrutschen des Versteifungselements (1) aus dem Hohlkammerdichtungsprofils nach der Montage bzw. beim Einbau der Dichtungsanordnung bestehend aus dem Hohlkammerdichtungsprofil und dem Versteifungselement (1). In diesem Ausführungsbeispiel endet der Zwischenbereich (7) in einem Spalt zwischen Fixierelement (10) und dem zweiten Schenkel (2).

Ein Versteifungselement (1) mit einem nach innen weisenden Einhängebereich/-abschnitt (4) ist in Figur 2 dargestellt. Dabei ist im Gegensatz zu Figur 1 der Einhängebereich/-abschnitt (4) an dem kleineren Radius des Versteifungselements (1) angeordnet. Je nach Einbausituation in das Hohlkammerdichtungsprofil, das in keinem der Figuren 1 bis 6 dargestellt ist, kann somit das Ausführungsbeispiel nach Figur 1 oder Figur 2 verwendet werden.

Der Zwischenbereich (7) ist geometrisch so ausgelegt, dass der Wandungsbereich des Hohlkammerdichtungsprofils im Bereich der Öffnung in diesen Zwischenbereich (7) eingeführt werden kann und somit nur eine kleine Öffnung/Spalt in dem Hohlkammerdichtungsprofil notwendig ist, um das gesamte Versteifungselement (1) in eine Hohlkammer des Dichtungsprofils einzuführen.

Die Versteifungselemente (1) gemäß den Figuren 1 und 2 sind als Stanzteil ausgeführt, so dass eine kostengünstige Herstellung vorteilhaft erreicht wird. Es liegt aber auch im Rahmen der Erfindung, das Versteifungselement (1) als Formteil, insbesondere als polymeres Formteil, herzustellen. Vorteilhaft eignen sich Formteile aus hochtemperaturbeständigen Polymeren der Gruppe Polyetheretherketon (PEEK), Polysulfon (PSU), Polyethersulfon (PES), Polyetherimid (PEI), Polyphenylensulfid (PPS) und Liquid Crystal Polymer (LCP) zur Herstellung der Versteifungselemente (1). Es ist auch der Einsatz anderer Werkstoffe möglich.

Für hohe Einsatztemperaturbereiche der Dichtungsanordnungen wurde auch der Einsatz von keramischen Stanzteilen aus z. B. Siliziumcarbid, Wolframcarbid, Siliziumoxinitrid, Wolframoxid, Zirkonoxid als vorteilhaft erkannt.

In Figur 3 ist ein Versteifungselement (1) dargestellt, das aus einem gebogenen Draht besteht. Dabei wird der zweite Schenkel (2) durch eine Drahtschlaufe gebildet. Diese verhindert, dass beim Einfädeln dieses Schenkels (2) in das Hohlkammerdichtungsprofil die Wandung im Inneren durch das Drahtende beschädigt wird. Auch wenn die Bewegungsrichtung des Versteifungselements (1) während des Einfädelvorgangs in die Hohlkammer des Dichtungsprofils geändert wird, kann eine Beschädigung der Wandung durch das gebogene Ende vorteilhaft vermieden werden.

Um die Steifigkeit des Versteifungselements (1) noch weiter zu erhöhen, kann ein Versteifungselement (1) mit zwei Schenkelabschnitten (8, 9) als Stanzteil oder Formteil verwendet werden. Dabei sind, wie in Figur 4 dargestellt, die beiden Schenkelabschnitte (8, 9) einerseits mit dem zweiten Schenkel (2) und andererseits mit dem Verbindungselement (5) einstückig verbunden.

In den Figuren 5 und 6 ist das Versteifungselement (1) aus der Figur 4 jeweils in einer Seitenansicht dargestellt. In diesen Ansichten ist der Zwischenbereich (7) zwischen dem Schenkel (3) bestehend aus den beiden Schenkelabschnitten (8, 9) gut zu erkennen. Dieses Ausführungsbeispiel ermöglicht es außerdem das Verbindungselement (5) nach dem Einführen des Versteifungselements (1) in das Hohlkammerdichtungsprofil so plastisch zu verformen, dass der Zwischenbereich (7) im Bereich des Einhängebereichs/-abschnitts (4) geschlossen (Figur 6) und somit eine ungewollte Demontage des Versteifungselements (1) verhindert wird.

Eine weitere Möglichkeit der Verhinderung der ungewollten Demontage besteht darin, dass ein Rastelement an dem Versteifungselement (1) angeordnet ist, dass den Zwischenbereich (7) nach dem Einbringen des Versteifungselements (1) in das Hohlkammerdichtungsprofils verschließt. Auch eine Kombination aus Verformung des Verbindungselements (5) und Verrasten des Verbindungselements (5) ist möglich.

Durch die geometrische Gestaltung des Versteifungselements (1) ist es möglich, ein sortenreines Recyceln der Dichtungsanordnung aus Hohlkammerdichtungsprofil und Versteifungselementen (1) zu gewährleisten.

## Patentansprüche

1. Versteifungselement (1) für Hohlkammerdichtungsprofile mit zwei Schenkeln (2, 3), die in einem stumpfen Winkel zueinander angeordnet sind, und einem zwischen den beiden Schenkeln (2, 3) angeordneten Einhängebereich/-abschnitt (4) zum Befestigen des Hohlkammerdichtungsprofils mit einem Versteifungselement (1) an einem Bauteil, **dadurch gekennzeichnet, dass** der Einhängebereich/-abschnitt (4) über ein Verbindungselement (5) mit einem Schenkelende (6) verbunden sowie durch einen Zwischenbereich (7) von diesem Schenkel (3), außer an der Verbindungsstelle, getrennt ist.

2. Versteifungselement (1) nach Anspruch 1, **dadurch gekennzeichnet, dass** die Schenkel (2, 3) unterschiedlich lang ausgebildet sind.

3. Versteifungselement (1) nach Anspruch 1 oder 2, **dadurch gekennzeichnet, dass** das das Versteifungselement (1) als gebogener metallischer Draht oder als Stanzteil oder als Formteil ausgeführt ist.

4. Versteifungselement (1) nach Anspruch 3, **dadurch gekennzeichnet, dass** das Formteil aus einem Polymer ausgewählt aus der Gruppe Polyetheretherketon (PEEK), Polysulfon (PSU), Polyethersulfon (PES), Polyetherimid (PEI), Polyphenylensulfid (PPS) und Liquid Crystal Polymer (LCP) besteht.

5. Versteifungselement (1) nach Anspruch 3, **dadurch gekennzeichnet, dass** das Stanzteil aus einem keramischen Werkstoff ausgewählt aus der Gruppe Siliziumcarbid, Wolframcarbid, Siliziumoxinitrid, Wolframoxid und Zirkonoxid besteht.

6. Versteifungselement (1) nach einem der vorhergehenden Ansprüche, **dadurch gekennzeichnet, dass** der Schenkel (3), dessen Ende mit dem Verbindungselement (5) verbunden ist, aus zwei Schenkelabschnitten (8, 9) besteht.

7. Versteifungselement (1) nach einem der vorhergehenden Ansprüche, **dadurch gekennzeichnet, dass** am Einhängebereich/-abschnitt (4) ein Fixierelement (10) angeordnet ist.

8. Dichtungsanordnung, bestehend aus einem Hohlkammerdichtungsprofil und mindestens einem Versteifungselement (1) nach einem der vorhergehenden Ansprüche, wobei die Schenkel (2,3) des Versteifungselements (1) in einer Hohlkammer des Hohlkammerdichtungsprofils angeordnet sind.

## Claims

1. Stiffening element (1) for hollow chamber sealing profiles having two legs (2, 3), which are arranged at an obtuse angle in relation to one another, and a hook-in region/portion (4), arranged between the two legs (2, 3), for fastening the hollow chamber sealing profile with a stiffening element (1) on a component, **characterized in that** the hook-in region/portion (4) is connected to a leg end (6) by way of a connecting element (5) and is separated from said leg (3), except at the site of connection, by an intermediate region (7).

2. Stiffening element (1) according to Claim 1, **characterized in that** the legs (2, 3) are formed with differing lengths.

3. Stiffening element (1) according to Claim 1 or 2, **characterized in that** the stiffening element (1) is in the form of a bent metallic wire or of a punched part or of a shaped part.

4. Stiffening element (1) according to Claim 3, **characterized in that** the shaped part consists of a polymer selected from the group consisting of polyether ether ketone (PEEK), polysulphone (PSU), polyether sulphone (PES), polyetherimide (PEI), polyphenylene sulphide (PPS) and liquid crystal polymer (LCP).

5. Stiffening element (1) according to Claim 3, **characterized in that** the punched part consists of a ceramic material selected from the group consisting of silicon carbide, tungsten carbide, silicon oxynitride, tungsten oxide and zirconium oxide.

6. Stiffening element (1) according to one of the preceding claims, **characterized in that** the leg (3), the end of which is connected to the connecting element (5), consists of two leg portions (8, 9).

7. Stiffening element (1) according to one of the preceding claims, **characterized in that** a fixing element (10) is arranged at the hook-in region/portion (4).

8. Sealing arrangement, consisting of a hollow chamber sealing profile and at least one stiffening element (1) according to one of the preceding claims, wherein the legs (2, 3) of the stiffening element (1) are arranged in a hollow chamber of the hollow chamber sealing profile.

## Revendications

1. Elément raidisseur (1) pour des profilés d'étanchéité à chambre creuse avec deux branches (2, 3), qui sont disposées selon un angle obtus l'une par rapport à l'autre, et avec une zone/partie de suspension (4) disposée entre les deux branches (2, 3) pour la fixation du profilé d'étanchéité à chambre creuse avec un élément raidisseur (1) à une pièce, **caractérisé en ce que** la zone/partie de suspension (4) est reliée à une extrémité de branche (6) par un élément de liaison (5) et est séparée par une zone intermédiaire (7) de cette branche (3), à l'extérieur du point de liaison.

2. Elément raidisseur (1) selon la revendication 1, **caractérisé en ce que** les branches (2, 3) sont de longueur différente.

3. Elément raidisseur (1) selon la revendication 1 ou 2, **caractérisé en ce que** l'élément raidisseur (1) est réalisé sous la forme d'un fil métallique cintré, d'une pièce estampée ou d'une pièce moulée.

4. Elément raidisseur (1) selon la revendication 3, **caractérisé en ce que** la pièce moulée se compose d'un polymère sélectionné dans le groupe comprenant la polyétheréthercétone (PEEK), le polysulfone (PSU), le polyéthersulfone (PES), le polyétherimide (PEI), le sulfure de polyphénylène (PPS) et un polymère à cristaux liquides (PCL).

5. Elément raidisseur (1) selon la revendication 3, **caractérisé en ce que** la pièce estampée se compose d'un matériau céramique sélectionné dans le groupe comprenant le carbure de silicium, le carbure de tungstène, l'oxynitrure de silicium, l'oxyde de tungstène et l'oxyde de zirconium.

6. Elément raidisseur (1) selon l'une quelconque des revendications précédentes, **caractérisé en ce que** la branche (3), dont l'extrémité est reliée à l'élément de liaison (5), se compose de deux parties de branche (8, 9).

7. Elément raidisseur (1) selon l'une quelconque des revendications précédentes, **caractérisé en ce qu'**un élément de fixation (10) est disposé sur la zone/partie de suspension (4).

8. Dispositif d'étanchéité, se composant d'un profilé d'étanchéité à chambre creuse et d'au moins un élément raidisseur (1) selon l'une quelconque des revendications précédentes, dans lequel les branches (2, 3) de l'élément raidisseur (1) sont disposées dans une chambre creuse du profilé d'étanchéité à chambre creuse.
